# EUROPÄISCHE PATENTSCHRIFT

(11) **EP 1 245 847 B1**
(45) Veröffentlichungstag und Bekanntmachung des Hinweises auf die Patenterteilung: **19.04.2006**
(21) Anmeldenummer: 02005831.9
(22) Anmeldetag: 14.03.2002
(51) Int. Cl.: F16C 33/80, A01D 69/12

(54) **Lagerung eines Gutförder-und/oder Gutbearbeitungselements für eine Erntemaschine**
Bearing of a crop transport and/or treatment device for a harvester
Palier d'un dispositif de transport et/ou de traitement pour une récolteuse

(30) Priorität: 28.03.2001 DE 10115331
(43) Veröffentlichungstag der Anmeldung: 02.10.2002
(73) Patentinhaber: DEERE & COMPANY, Moline, Illinois 61265-8098 (US)
(72) Erfinder: Vogelgesang, Claus-Josef, 66399 Mandelbachtal (DE)
(74) Vertreter: Holst, Sönke

(56) Entgegenhaltungen:
- DE-A- 3 516 131
- FR-A- 2 774 438
- NL-C- 32 351
- US-A- 4 895 460

## Beschreibung

Die Erfindung betrifft eine Erntemaschine mit einem Gutförder- und/oder Gutbearbeitungselement und einer Lagerung des Gutförder- und/oder Gutbearbeitungselements, wobei die Lagerung mit einem Wälzlager oder Gleitlager und einer Vorkammer versehen ist, die das Lager vor dem Eindringen von Pflanzensäften schützt und durch eine Schmiermittelzuführung ein Schmiermittel zum Lager und in die Vorkammer verbringbar ist.

In der DD 121 704 A ist eine Förderwalze eines Feldhäckslers beschrieben, bei der einer Lagerung in Form eines Stellringlagers in Richtung auf die Förderwalze zu mehrere Fettkammern vorgelagert sind. Die Fettkammern dienen dazu, das Stellringlager vor einem Eindringen von Pflanzensäften, die eine Korrosion und Zerstörung des Stellringlagers bedingen können, zu schützen. Eine einzige, mit der zentralen Schmiermittelzuführung verbundene Fettzuführung versorgt das Stellringlager mit Fett, das vom Stellringlager durch Dichtungen auch in die Fettkammer gelangt. Dabei ist als nachteilig anzusehen, dass das Stellringlager mit einem relativ hohen Schmiermitteldruck beaufschlagt werden muss, damit die Fettkammer hinreichend mit Fett versorgt wird. Dadurch entsteht ein hoher Fettbedarf und das Stellringlager kann durch übermäßigen Fettdruck oder übermäßige Schmierung beschädigt werden.

Die DE 35 16 131 A beschreibt ein Wälzlager für landwirtschaftliche Erntemaschinen oder Baumaschinen, das durch eine Labyrinthdichtung nach außen abgedichtet ist. Eine Schmiermittelzuführung versorgt das Wälzlager und die dem Wälzlager benachbarte Innenseite der Labyrinthdichtung mit Schmiermittel, so dass auch hier die im Zusammenhang mit der DD 121 704 A erwähnten Nachteile auftreten.

In der NL 32 351 C wird eine Lagerung für eine drehbare Rolle eines im Wasser arbeitenden Baggers beschrieben. Zwischen der Lagerung und der Umgebung befinden sich zwei hintereinander angeordnete Labyrinthdichtungen. Die Lagerung und die ihm benachbarte Labyrinthdichtung wird durch einen ersten Schmiernippel mit geeignetem Schmierfett versorgt, während die äußere, mit dem Wasser in Kontakt kommende Labyrinthdichtung durch einen anderen Schmiernippel mit einer wasserbeständigen Fettsorte beaufschlagt wird.

Das der Erfindung zugrunde liegende Problem wird darin gesehen, eine Lagerung eines Gutförder- und/oder Gutbearbeitungselements einer Erntemaschine dahingehend zu verbessern, dass ohne übermäßige Schmierung der Wälzlager der Lagerung eine einwandfreie Schmierung der Vorkammer möglich ist.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung schlägt vor, bei einer Erntemaschine mit einem Gutförder- und/oder Gutbearbeitungselement und einer an sich bekannten Lagerung des Gutförder- und/oder Gutbearbeitungselements das Lager vor eindringenden Pflanzensäften schützende Vorkammer mit einer ersten Schmiermittelzuführung und das Lager mit einer zweiten Schmiermittelzuführung zu verbinden, wobei die Vorkammer und das Lager, bei dem es sich um ein Wälzlager, z.B. Kugel-, Rollen oder Nadellager, handelt, voneinander getrennt mit Schmiermittel (in der Regel Fett) versorgt werden. Anstelle des Wälzlagers kann ein Gleitlager verwendet werden.

Dadurch erreicht man, dass durch die erste Schmiermittelzuführung eine hinreichende Schmierung der Vorkammer gewährleistet werden kann. Dabei ist aber eine Überschmierung oder ein übermäßiger Schmiermitteldruck im Wälzlager vermieden.

Die Erfindung eignet sich für alle Gutförder- und/oder Gutbearbeitungselemente von selbstfahrenden oder angebauten bzw. gezogenen Erntemaschinen, auch von Erntevorsätzen. Sie kann insbesondere bei Feldhäckslern zur Anwendung kommen, mit denen häufig Pflanzen geerntet werden, aus denen Säfte austreten, die geeignet sind, Lagerungen zu beschädigen. Die Lagerung kann somit für Einzugswalzen, Häckseltrommeln, Walzen von Nachzerkleinerungsvorrichtungen oder Fördervorrichtungen (Gebläse) verwendet werden.

Vorzugsweise ist die Vorkammer über einen ersten Kanal mit der ersten Schmiermittelzuführung verbunden, während das Wälzlager über einen zweiten, keine direkte Verbindung zum ersten Kanal aufweisenden Kanal mit der zweiten Schmiermittelzuführung verbunden ist.

Es bietet sich an, die erste und zweite Schmiermittelzuführung mit einer zentralen Schmiermittelzuführung zu verbinden, die die Lagerung auf eine Bedienereingabe hin oder selbsttätig nach einer bestimmten Betriebszeit mit Schmiermittel versorgt. Dabei ist es bevorzugt, wenn die zweite Schmiermittelversorgung länger oder mit unter höherem Druck stehenden Schmiermittel beaufschlagt wird als die erste Schmiermittelversorgung.

In der Zeichnung ist ein nachfolgend näher beschriebenes Ausführungsbeispiel der Erfindung dargestellt. Es zeigt:
- Fig. 1: eine Erntemaschine in Seitenansicht und in schematischer Darstellung und
- Fig. 2: eine Querschnittsansicht einer erfindungsgemäßen Lagerung.

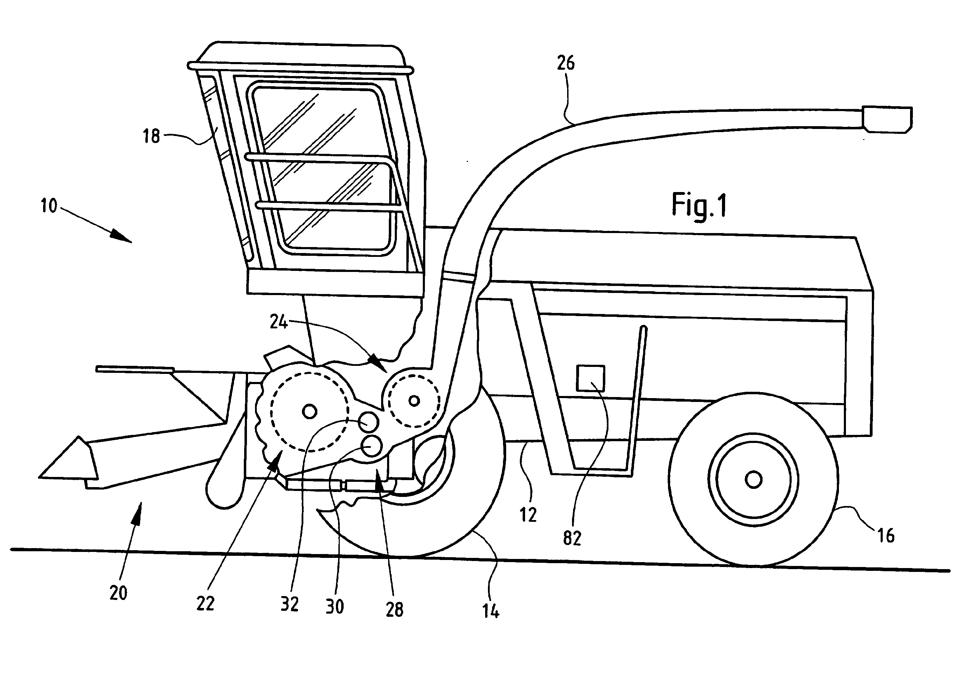

Eine in Figur 1 gezeigte Erntemaschine 10 in der Art eines selbstfahrenden Feldhäckslers baut sich auf einem Rahmen 12 auf, der von vorderen und rückwärtigen Rädern 14 und 16 getragen wird. Die Bedienung der Erntemaschine 10 erfolgt von einer Fahrerkabine 18 aus, von der aus eine Erntegutaufnahmevorrichtung 20 in Form eines Maisgebisses einsehbar ist. Mittels der Erntegutaufnahmevorrichtung 20 vom Boden aufgenommenes Gut, z. B. Mais, Gras oder dergleichen wird einer Häckseltrommel 22 zugeführt, die es in kleine Stücke häckselt und es einer Fördervorrichtung 24 aufgibt. Das Gut verlässt die Erntemaschine 10 zu einem nebenher fahrenden Anhänger über einen drehbaren Austragsschacht 26. Zwischen der Häckseltrommel 22 und der Fördervorrichtung 24 erstreckt sich eine Nachzerkleinerungsvorrichtung 28, durch die das zu fördernde Gut der Fördervorrichtung 24 tangential zugeführt wird. Die Nachzerkleinerungsvorrichtung 28 weist zwei Walzen 30, 32 auf, die gegensinnig in Drehung versetzt werden.

Ein potentielles Problem der Nachzerkleinerungseinrichtung 28 und auch der anderen Gutförder- und/oder Gutbearbeitungselemente der Erntemaschine 10, beispielsweise der Fördereinrichtung 24 und der nicht eingezeichneten Einzugswalzen, die der Häckseltrommel 22 vorgeordnet sind, besteht darin, dass bei der Förderung bzw. Bearbeitung des Ernteguts Pflanzensäfte anfallen, die in die Lagerungen der Gutförder- und/oder Gutbearbeitungselemente eindringen und sie durch Korrosion zerstören können.

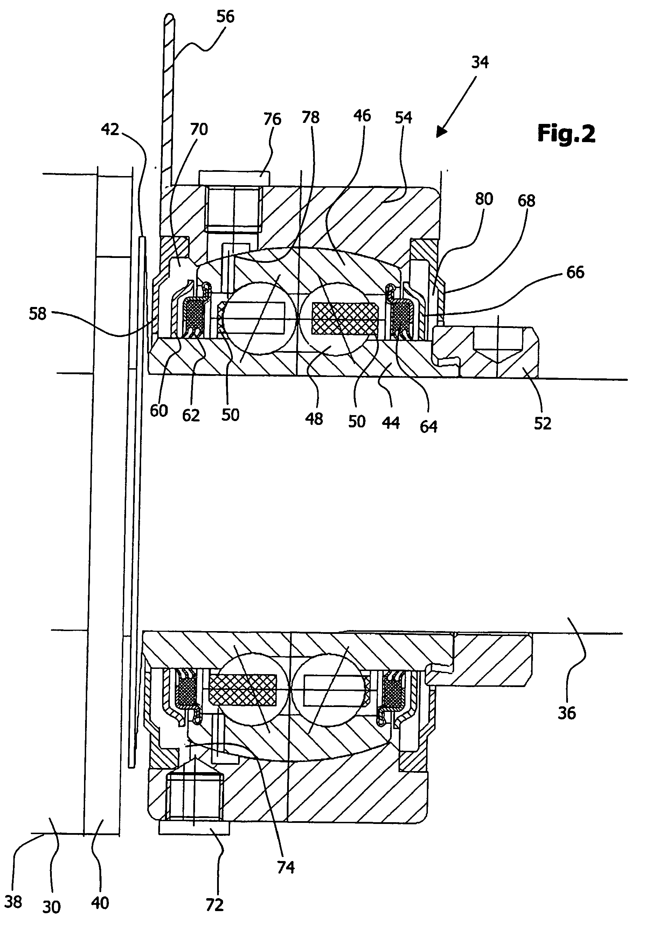

Um das Eindringen von Pflanzensäften in die Wälzlager zu verhindern, ist die untere Walze 30 der Nachzerkleinerungsvorrichtung 28 mit einer Lagerung 34 ausgestattet, die in Figur 2 detaillierter dargestellt ist. Auch die obere Walze 32 kann mit einer derartigen Lagerung 34 versehen sein.

Die Walze 30 weist einen Mantel 38 auf, in den eine endseitige Stützscheibe 40 eingesetzt ist. Die Stützscheibe 40 trägt einen Wellenstummel 36. Zwischen der Stützscheibe 40 und der Lagerung 34 ist eine auf den Wellenstummel 36 aufgesetzte Schutzscheibe 42 angeordnet, die die Lagerung 34 vor Pflanzensäften schützen soll. Die Lagerung 34 weist einen inneren Kugellaufring 44, der auf den Wellenstummel 36 aufgesetzt ist, und einen äußeren Kugellaufring 46 auf, der den inneren Kugellaufring 44 umschließt. Zwischen dem inneren Kugellaufring 44 und dem äußeren Kugellaufring 46 sind als Wälzlager eine Reihe Kugeln 48 angeordnet, die durch Käfige 50 gehaltert sind und in entsprechenden, abgerundeten Laufbahnen der Kugellaufringe 44, 46 abrollen. In axialer Richtung sind zwei Reihen von Kugeln 48 hintereinander angeordnet. Der innere Kugellaufring 44 ist durch eine Klemmscheibe 52 auf dem Wellenstummel 36 befestigt. Die Klemmscheibe 52 oder der über sie in der Zeichnung nach rechts hinausragende Teil des Wellenstummels 36 kann auch zur Befestigung einer Riemenscheibe oder eines anderen Antriebsmittels dienen. Der äußere Kugellaufring 46 wird durch ein Lagergehäuse 54 radial umschlossen, das seinerseits an einer Seitenwand 56 des Gutförderkanals der Erntemaschine 10 befestigt ist.

Zwischen dem Lagergehäuse 54 und dem inneren Kugellaufring 44 ist eine erste Dichtung 58 in Form eines mit dem Lagergehäuse 54 verbundenen, sich radial nach innen bis fast zum inneren Kugellaufring 44 erstreckenden Rings angeordnet. Eine zweite Dichtung 60 in Form eines sich vom inneren Kugellaufring 44 radial nach außen erstreckenden Rings, der in seinem Außenbereich von der Walze 30 fort axial nach außen gebogen ist, ist in Achsrichtung des Wellenstummels 36 weiter außen als die erste Dichtung 58 angeordnet. Die erste Dichtung 58 und die zweite Dichtung 60 bilden eine Labyrinthdichtung. Eine dritte Dichtung 62 mit am inneren Kugellaufring 44 anliegenden, flexiblen Lippen 62 ist wiederum weiter von der Walze 30 entfernt als die zweite Dichtung 60 und mit dem äußeren Kugellaufring 46 verbunden. Die drei Dichtungen 58, 60 und 62 verhindern, dass Pflanzensäfte zu den Kugeln 48 gelangen. An der Außenseite der Lagerung 34 sind weitere drei Dichtungen 64, 66 und 68 angeordnet, die im wesentlichen zu den drei Dichtungen 58, 60 und 62 symmetrisch sind. Jedoch ist die äußerste Dichtung 68 der Klemmscheibe 52 gegenüberliegend angeordnet.

Zwischen der ersten Dichtung 58, der zweiten Dichtung 60 und der dritten Dichtung 62 ist eine hohlraumförmige Vorkammer 70 vorgesehen, die durch eine erste, das Lagergehäuse 54 radial durchdringende Schmiermittelzuführung 72 über einen ersten Kanal 74 mit Fett versorgt wird. Die Kugeln 48 werden über eine zweite, das Lagergehäuse 54 radial durchdringende Schmiermittelzuführung 76 und einen zweiten Kanal 78 mit Fett versorgt. Über den zweiten Kanal 78, den Raum zwischen den Kugeln 48 und unter der äußeren Dichtung 64 mit am inneren Kugellaufring 44 anliegenden flexiblen Lippen hindurch wird auch eine äußere Vorkammer 80 zwischen den drei Dichtungen 64, 66 und 68 mit Fett versorgt. Die getrennten Schmiermittelzuführungen 72 und 76 erlauben, die Vorkammer 70 und die Kugeln 48 einzeln mit Fett zu versorgen, so dass die zugeführten Fettmengen entsprechend ihres Bestimmungsortes dosiert werden können. Die Fettmenge kann durch die Zeitintervalle zwischen Schmierungen oder die jeweils eingebrachte Fettmenge festgelegt werden. Auf diese Weise kann die Vorkammer 70 mit relativ viel Fett versorgt werden, das das verbrauchte, mit den Pflanzensäften beaufschlagte alte Fett aus der Vorkammer 70 hinausdrängt, während die Kugeln 48 nur relativ wenig und unter geringem Druck stehendes Fett erhalten, was ihre Lebensdauer verlängert. Die Schmiermittelzuführungen 72, 76 sind vorzugsweise mit einer zentralen Schmiermittelversorgung 82 der Erntemaschine 10 verbunden.

Anzumerken ist, dass auch die äußere Vorkammer 80 mit einer ihr zugeordneten, dritten Schmiermittelzuführung und einen entsprechenden Kanal separat mit Fett versorgt werden könnte. Die Schmiermittelzuführungen 72, 76 müssen sich nicht diametral gegenüberliegen, wie in der Zeichnung angedeutet, sondern können um nur einige Winkelgrade gegeneinander azimutal versetzt angeordnet sein.

## Patentansprüche

1. Erntemaschine (10) mit einem Gutförder- und/oder Gutbearbeitungselement (30) und einer Lagerung (34) des Gutförder- und/oder Gutbearbeitungselements (30), wobei die Lagerung (34) mit einem Lager in Form eines Wälzlagers (48) oder eines Gleitlagers und einer Vorkammer (70) versehen ist, die das Lager (48) vor dem Eindringen von Pflanzensäften schützt und durch eine Schmiermittelzuführung (76) ein Schmiermittel zum Lager (48) und in die Vorkammer (70) verbringbar ist, **dadurch gekennzeichnet, dass** die Vorkammer (70) durch eine erste Schmiermittelzuführung (72) und das Lager durch eine zweite Schmiermittelzuführung (76) unabhängig voneinander mit Schmiermittel versorgbar sind.

2. Erntemaschine (10) nach Anspruch 1, **dadurch gekennzeichnet, dass** die Vorkammer (70) durch einen ersten Kanal (74) mit der ersten Schmiermittelzuführung (72) verbunden ist, und dass das Lager (48) durch einen zweiten Kanal (78) mit der zweiten Schmiermittelzuführung (76) verbunden ist, wobei der erste Kanal (74) keine direkte Verbindung zum zweiten Kanal (78) aufweist.

3. Erntemaschine (10) nach Anspruch 1 oder 2, **dadurch gekennzeichnet, dass** die Lagerung (34) eine Einzugswalze oder eine Häckseltrommel (22) oder eine Walze (30, 32) einer Nachzerkleinerungsvorrichtung (28) oder eine Fördervorrichtung (24) abstützt.

4. Erntemaschine (10) nach einem der Ansprüche 1 bis 3, **dadurch gekennzeichnet, dass** die erste Schmiermittelzuführung (72) und die zweite Schmiermittelzuführung (76) mit einer Schmiermittelversorgung verbunden sind, die betreibbar ist, die erste Schmiermittelzuführung (72) kürzer oder mit unter geringerem Druck stehenden Schmiermittel zu beaufschlagen als die zweite Schmiermittelzuführung (76).

## Claims

1. Harvesting machine (10) with a crop conveying and/or crop processing element (30) and a bearing arrangement (34) of the crop conveying and/or crop processing element (30), wherein the bearing arrangement (34) is provided with a bearing in the form of a rolling bearing (48) or a slide bearing and an antechamber (70), which protects the bearing (48) against the penetration of plant juices, and through a lubricant feed line (76) a lubricant can be delivered to the bearing (48) and into the antechamber (70), **characterised in that** independently of one another the antechamber (70) is supplied with lubricant through a first lubricant feed line (72) and the bearing is supplied with lubricant through a second lubricant feed line (76).

2. Harvesting machine (10) according to Claim 1, the antechamber (70) is connected to the first lubricant feed line (72) through a first duct (74), and that the bearing (48) is connected to the second lubricant feed line (76) through a second duct (78), wherein the first duct (74) has no direct connection to the second duct (78).

3. Harvesting machine (10) according to Claim 1 or 2, **characterised in that** the bearing arrangement (34) supports an auger or a chopper drum (22) or a roller (30, 32) of an after-crusher device (28) or a conveyor device (24).

4. Harvesting machine (10) according to one of Claims 1 to 3, **characterised in that** the first lubricant feed line (72) and the second lubricant feed line (76) are connected to a lubricant supply system, which can be operated to load the first lubricant feed line (72) for a shorter period or with lubricant at a lower pressure than the second lubricant feed line (76).

## Revendications

1. Machine de récolte (10) comportant un élément de convoyage et de traitement des végétaux (30) et un système de palier (34) pour l'élément de convoyage et de traitement des végétaux (30), le système de palier (34) étant muni d'un palier (48), en forme de palier à roulement ou de palier lisse, et d'une préchambre (70), qui protège le palier (48) contre la pénétration des sucs des végétaux et un lubrifiant peut être amené par l'intermédiaire d'un conduit d'admission de lubrifiant (76) vers le palier (48) et dans la préchambre (70), **caractérisée en ce que** la préchambre (70) et le palier (48) peuvent être alimentés en lubrifiant indépendamment l'un de l'autre, respectivement par l'intermédiaire d'un premier conduit d'admission de lubrifiant (72) et par l'intermédiaire d'un deuxième conduit d'admission de lubrifiant (76).

2. Machine de récolte (10) selon la revendication 1, **caractérisée en ce que** la préchambre (70) est reliée au premier conduit d'admission de lubrifiant (72) par l'intermédiaire d'un premier canal (74), et **en ce que** le palier (48) est relié au deuxième conduit d'admission de lubrifiant (76) par l'intermédiaire d'un deuxième canal (78), le premier canal (74) n'ayant pas de liaison directe avec le deuxième canal (78).

3. Machine de récolte (10) selon la revendication 1 ou 2, **caractérisée en ce que** le système de palier (34) supporte un rouleau d'introduction ou un tambour de hachage (22) ou un rouleau (30, 32) d'un dispositif de broyage supplémentaire (28) ou un convoyeur (24).

4. Machine de récolte (10) selon l'une quelconque des revendications 1 à 3, **caractérisée en ce que** le premier conduit d'admission de lubrifiant (72) et le deuxième conduit d'admission de lubrifiant (76) sont reliés à un dispositif d'alimentation en lubrifiant qui peut être actionné de telle sorte que le premier conduit d'admission de lubrifiant (72) est alimenté pendant un intervalle de temps plus court ou avec un lubrifiant sous une plus faible pression que le deuxième conduit d'admission de lubrifiant (76).
